# EUROPEAN PATENT APPLICATION

(11) **EP 2 315 413 A1**
(43) Date of publication of application: **27.04.2011**
(21) Application number: 09306008.5
(22) Date of filing: 26.10.2009
(51) Int. Cl.: H04L 29/08, H04L 12/24

(54) **Method and apparatus for communicating an autonomous transfer failure alarm**

(71) Applicant: Alcatel Lucent, 75008 Paris (FR)
(72) Inventor: Cristallo, Geoffrey, 1080 Brussel (BE); Vandaele, Piet, 9040 Sint-Amandsberg (BE)
(74) Representative: D'Halleweyn, Nele Veerle Trees Gertrudis

(57) **Abstract**

The present invention relates to home devices such as set-top boxes, and more particularly to methods providing autonomous file transfers to and from such home devices. The present invention provides a method for a home device to reliably inform the ACS of the result of autonomous uploads and downloads without overloading the ACS, even when large numbers of home devices complete uploads and/or downloads at substantially the same time, by letting the device change the value of a management object if said transfer fails and transmitting a notification of said changing to said server.

## Description

### Field of the Invention

The present invention relates to home devices such as set-top boxes, and more particularly to methods providing autonomous file transfers to and from such home devices.

### Background

In home devices such as those complying with the TR-069 standard, a capability to autonomously upload or download files may be provided. Such a file upload or download may be initiated by the home device without intervention from the Auto Configuration Server (ACS). It has been noted that it may be desirable to keep the ACS informed of such uploads and downloads. A known method to inform the ACS, which has been proposed in TR-069 Amendment 2, comprises sending an Autonomous Transfer Complete" (ATC) message from the home device to the ACS upon successful completion of a autonomous file upload or download, as well as in case of failure.

### Summary

It is an object of embodiments of the present invention to provide a method to reliably inform the ACS of the result of autonomous uploads and downloads without overloading the ACS, even when large numbers of home devices complete uploads and/or downloads at substantially the same time.

The present invention thus provides a method for reporting to a server the result of a file transfer attempted by a device, comprising initiating a transfer of a file between said device and a correspondent; changing the value of a management object if said transfer fails; and transmitting a notification of said changing to said server.

In an embodiment, the method of the present invention further comprises sending an alive message to said server at a predetermined time offset.

In an embodiment, the method of the present invention further comprises receiving an announcement of availability of said file for transfer and performing said initiating after said receiving of said announcement.

In an embodiment of the method of the present invention, said announcement comprises a uniform resource locator.

The present invention also provides a method for detecting the status of a file transfer attempted by a device, comprising listening for a notification from said device of a change in a value of a management object; and determining, if said notification is received, that said file transfer is unsuccessful.

In an embodiment, the method of the present invention further comprises observing a first timer representative of an expected arrival of said notification; and determining, if said first timer expires and said notification has not been received, that said file transfer is successful or said device is inactive.

In an embodiment, the method of the present invention further comprises listening for an alive message from said device; observing a second timer representative of an expected arrival of said alive message; determining, if said second timer expires and said alive message has not been received, that said device is inactive; and determining, if said alive message is received, that said device is active.

In an embodiment, the method of the present invention further comprises sending configuration information to said device upon said determining that said file transfer is unsuccessful.

In embodiments of the method of the present invention, said device is a home device.

In embodiments of the method of the present invention, said server is an auto-configuration server.

The present invention also provides a network device comprising a file transfer unit, a management information base comprising a plurality of management objects, and a notification message generator, wherein said file transfer unit is adapted to change a value of a first one of said plurality of management objects in dependency of a failure to transfer a file, and said notification message generator is adapted to detect a change of said value and to generate a notification message upon said detecting. The network device may be a home device, such as a set-top box.

In an embodiment, the network device of the present invention further comprises an alive message generator adapted to generate an alive message at a predetermined time offset.

In an embodiment, the network device of the present invention further comprises a receiver for receiving a file availability announcement and adapted to convey file availability information to said file transfer unit, wherein said file transfer unit is adapted to initiate a transfer of a file upon receipt of said file availability information.

### Brief Description of the Drawings

Some embodiments of apparatus and/or methods in accordance with embodiments of the present invention are now described, by way of example only, and with reference to the accompanying drawings, in which:
Figure 1 schematically illustrates a network layout comprising an Auto Configuration Server (ACS), a file server, and a plurality of home devices, and steps performed according to an embodiment of the method of the present invention;
Figure 2 schematically illustrates a network layout comprising an Auto Configuration Server (ACS), a file server, and a home device, and steps performed according to another embodiment of the method of the present invention;
Figure 3 illustrates a flow chart of the method of the present invention, pertaining to the operations of the device.
Figure 4 illustrates a flow chart of the method of the present invention, pertaining to the operations of the server.
Figure 5 schematically illustrates an apparatus according to the invention.

### Description of Embodiments

It is considered useful to allow a server that does not take part in a particular file transfer, such as an ACS, to stay informed of the status of attempted file transfers by home devices under its supervision or control. With respect to file downloads, this information allows the ACS for example to run additional actions for those home devices that have downloaded a particular software release, such as a new feature or a patch. With respect to failed transfers, the information allows the ACS to take the necessary steps to remove the cause of the failure, for example by correcting the uniform resource locator (URL) or the credentials used by the home device in the failed transfer.

The invention is based on the insight that it may be expected that large numbers of home devices will be made aware of the availability of new files for downloading at substantially the same time, because they will be receiving messages about these files from the same source over a common communication infrastructure, such as a multicast channel. The invention is further based on the insight that in a properly designed network environment, the majority of these uploads or downloads will be successful, and that this would lead, under the known methods, to a flood of near-simultaneous "Autonomous Transfer Complete" messages towards the ACS, which may cause an overloading of the ACS.

According to the invention, overloading of the ACS may be advantageously prevented by avoiding notifications of successful autonomous uploads and downloads, which are expected to be the most frequent occurrences, and by instead reporting only unsuccessful autonomous uploads and downloads. Further according to the invention, additional steps are provided to avoid drawing false inferences from the receipt or non-receipt of a failure notification.

The present invention therefore suppresses the notification of successful autonomous uploads and downloads, and only provides notification of unsuccessful autonomous uploads and downloads, hereinafter "Autonomous Transfer Failure Alarms". Embodiments of the present invention provide Autonomous Transfer Failure Alarms by changing the value of a dedicated management object, for which an active notification mechanism, such as a trap or an alarm as defined by known management protocols, is enabled. In particular embodiments, the active notification mechanism comprises the transmission of a TR-069 "Inform" message.

Particular embodiments of the invention determine the occurrence of a successful autonomous upload or download from transfer scheduling information, the occurrence of an Autonomous Transfer Failure Alarm, and information about the activity of the home device in question.

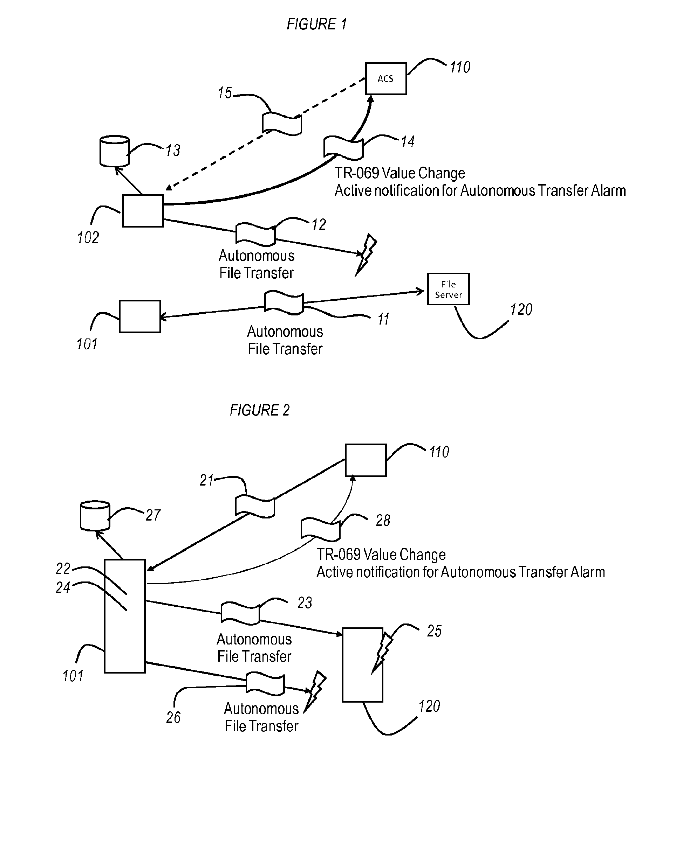

A particular embodiment of the present invention is now described with reference to Figure 1. In a first step **11,** a first device **101** autonomously uploads a file to the file server **120.** This autonomous upload succeeds. The first device **101** does not send the "Autonomous Transfer Complete" message or any additional TR-069 message to the ACS **110,** because the method does not rely on the ACS's **110** capability to support these specific messages.

In a second step **12,** a second device **102** attempts to autonomously upload a file to the file server **120.** This autonomous upload fails. This may be due to the fact that the URL of the file server used by the second device **102** is incorrect, or the credentials used by the second device **102** to upload the file to the file server **120** are wrong (wrong username/password).

In a third step **13,** the second device **102** creates an Autonomous Transfer Alarm, i.e. the second device **102** creates the corresponding alarm object in its data model.

Since the autonomous Transfer failed, the second device **102** reports this new alarm to the ACS **110** in a fourth step **14,** using the TR-069 active notification mechanism. The TR-069 active notification mechanism is implemented using the TR-069 inform message, which is a mandatory message supported in previous versions of TR-069.

In an optional fifth step **15,** the ACS **110** may reconfigure the second device **102,** for instance to correct the URL and/or credentials to be used for the upload.

Another particular embodiment of the method according to the present invention is now illustrated with reference to Figure 2. This embodiment illustrates how the solution can be used in combination with the autonomous and periodic file transfer, for instance for Performance Management (PM).

In a first step **21,** the ACS **110** configures the device **101** with the URL of the file server **12** to which the file is to be uploaded, the set of parameters for which measurements have to be collected (e.g. parameters "A" and "B"), and the sampling frequency for statistics collection (e.g. every hour). The ACS **110** further configures the device **101** with a frequency for File Upload (e.g. every day, i.e. after 24 samples have been collected if the sampling frequency is 1h).

In a second step **22,** the device **101** performs statistics collection (e.g. measuring/sampling parameters "A" and "B" every hour). The device **101** stores these samples in a local file.

Upon expiration of the timer for autonomous file upload, the device **101** autonomously uploads the statistics file to the specified file server **120,** which is shown as a third step **23.** With the exemplary parameters selected above, this concerns 24 samples of objects "A" and "B" with a sampling period of 1h. If this upload succeeds, the device **101** does not send any notification to the ACS **110.**

In a fourth step **24,** the device **101** restarts the upload timer and the sampling timer.

To further clarify the operation of the method, a hypothetical file server crash is now assumed as a fifth step **25.**

Upon expiration of the timer for autonomous file upload, i.e. after 1 day according to the exemplary parameters selected above, the device **101** in a sixth step **26** attempts to autonomously upload the statistics file, containing 24 samples of "A" and "B" with a sampling period of 1h, to the specified file server **120.** This upload will fail because the file server **120** has crashed **26.** In a seventh step **27,** the device **101** creates an alarm. In an eighth step **28,** the device **101** reports the alarm to the ACS **110.** As a result of this report, the ACS **110** may take any appropriate further steps (not shown), which may include reconfiguring the device **101** with a new or corrected URL and/or credentials for the transfer of the file.

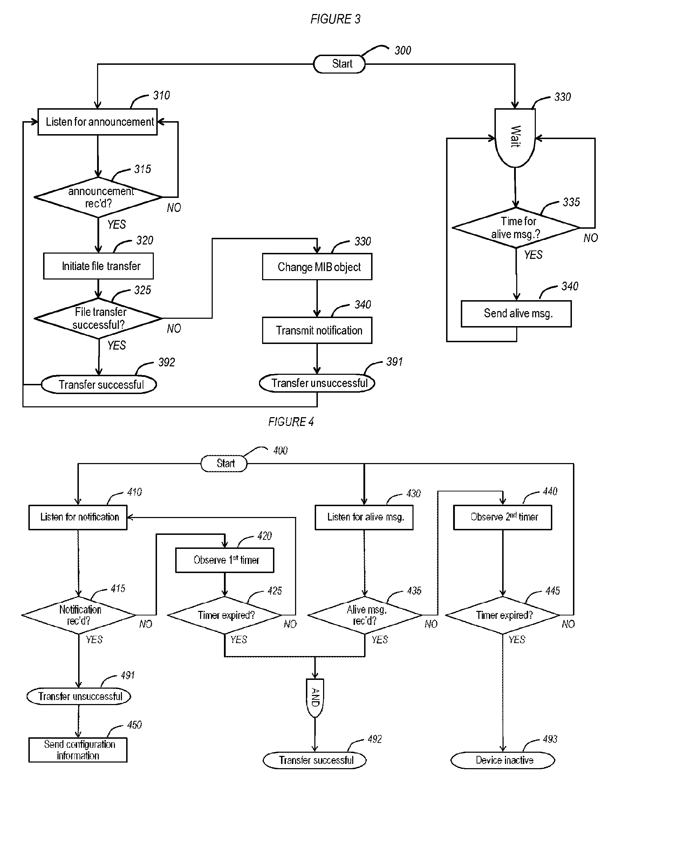

The underlying algorithms are now described in more detail with reference to Figure 3 and Figure 4.

Figure 3 schematically illustrates exemplary steps carried out by the device, e.g. the home device or set-top box, participating in the method of the present invention. The initial reference condition is indicated by the label **300.** A first activity flow optionally comprises listening **310** for an announcement pertaining to the availability of a file for download by the device. Such announcements may be broadcast or multicast to multiple devices by the service provider offering the files for transfer. Alternatively, an announcement may be directed to a particular device. If such an announcement is received **315,** this may serve as a trigger for initiating **320** the file transfer. Due to any number of conditions, the file transfer may either succeed or fail, which causes the activity flow to branch at the test **325.** If the transfer is successful, the flow run terminates **392,** and the process may be restarted by listening **310** for further announcements, if this is desired. If the transfer is unsuccessful, the value of an appropriate management object is changed **330.** This change leads to the transmission of a change notification **340** by means of any adequate message as defined in known management protocols. The flow run terminates unsuccessfully **391.** Further steps may include renewed attempts at transferring the file **320,** listening for announcements concerning other files **310,** awaiting new configuration instructions (not illustrated) and so on. A second activity flow concerns sending an alive message **340** at a predetermined time, or at predetermined intervals. The timing of these transmissions is schematically shown as the combination of a waiting step **330** and a testing step **335.** The transmission of alive messages allows the server to differentiate between a situation where only successful file transfers are taking place, represented by the receipt of alive messages and no failure notifications, and a situation where the device is inactive, represented by the receipt of neither alive messages nor failure notifications.

Figure 4 schematically illustrates exemplary steps carried out by the server, e.g. the ACS, participating in the method of the present invention. The initial reference condition is indicated by the label **400.** A first activity flow comprises listening for failure notifications **410** from any number of devices under the supervision or control of the server. If a notification is received **415,** it may be asserted that an unsuccessful transfer **491** has occurred. The server may optionally send new configuration information **450** to the device in order to remove the cause of the failure, and prevent later failures of the same nature. If no notification is received **415,** this may be due to a failure-free situation **492** or to the general inactivity of the device in question **493.** The two situations are distinguished by means of the timer observations **420** and **440,** related to the time at which a failure notification and an alive message are expected, respectively. If the first timer has expired **425** before a failure notification has been received, and any alive message that has come due has indeed been received **435,** the transfer may be declared successful **492.** If, however, the expiry of the second timer is observed **445** without having received the corresponding alive message **435,** the device in question is declared inactive **493.**

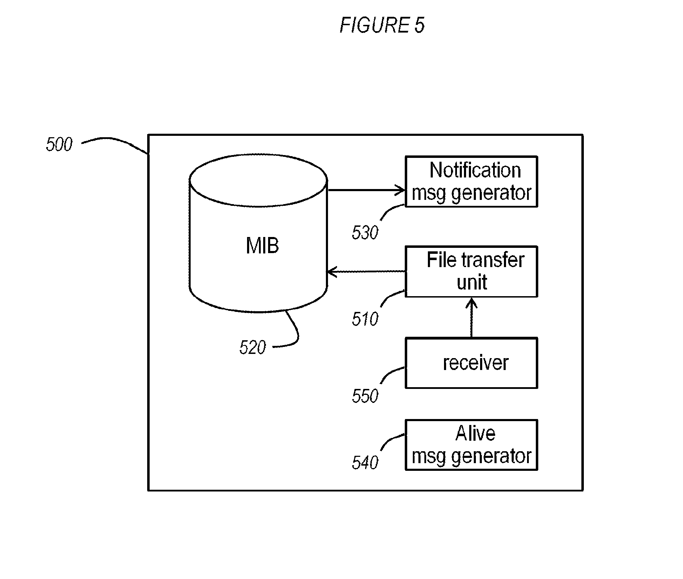

The device of the present invention is schematically illustrated in Figure 5, whereby the different elements may correspond to individual hardware components, integrated hardware components, or software components running on a processor, in various combinations, as would be readily understood by the person skilled in the art. It will furthermore be appreciated that the network device comprises means to transmit and receive messages on a network according to an appropriate protocol stack (not shown), and that the different elements of the device have access to these means in the usual way to perform their functions. The alive message generator **540** generates alive messages at a predetermined time or at predetermined intervals. Its operation is essentially independent from the other elements. The receiver **550** listens for announcements concerning the availability of files for transfer, for example by being subscribed to a multicast channel carrying such announcements. Upon receiving such an announcement, the receiver **550** may trigger the file transfer unit **510** to initiate a file transfer. If a file transfer attempted by the file transfer unit **510** fails, an appropriate management object in the management information base (MIB) **520** is modified. A single management object may be provided to take on different values according to a number of different possible causes of failure. Alternatively, several management objects may be provided, each of which is set or reset according to the occurrences of the respective failure conditions which they represent. The notification message generator **530** monitors the changes in the relevant management object or objects of the MIB **520,** and transmits a notification message upon detecting such a change.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for reporting to a server the result of a file transfer attempted by a device comprising a management information base, said method comprising the following steps, performed by said device:
- initiating a transfer of a file with a correspondent;
- changing the value of a management object in said management information base if said transfer fails; and
- transmitting a notification of said changing to said server.

2. The method of claim 1, further comprising:
- sending an alive message to said server at a predetermined time offset.

3. The method of claim 1 or claim 2, further comprising:
- receiving an announcement of availability of said file for transfer;
- performing said initiating after said receiving of said announcement.

4. The method of claim 3, wherein said announcements comprises a uniform resource locator.

5. The method of any of the preceding claims, wherein said device is a home device.

6. The method of any of the preceding claims, wherein said server is an auto-configuration server.

7. A method for detecting the status of a file transfer attempted by a device, comprising:
- listening for a notification from said device of a change in a value of a management object; and
- determining, if said notification is received, that said file transfer is unsuccessful.

8. The method of claim 7, further comprising:
- observing a first timer representative of an expected arrival of said notification; and
- determining, if said first timer expires and said notification has not been received, that said file transfer is successful or said device is inactive.

9. The method of claim 8, further comprising:
- listening for an alive message from said device;
- observing a second timer representative of an expected arrival of said alive message;
- determining, if said second timer expires and said alive message has not been received, that said device is inactive; and
- determining, if said alive message is received, that said device is active.

10. The method of any of claims 7 to 9, further comprising:
- sending configuration information to said device upon said determining that said file transfer is unsuccessful.

11. The method of any of claims 7 to 10, wherein said device is a home device.

12. The method of any of claims 7 to 11, wherein said server is an auto-configuration server.

13. A network device comprising a file transfer unit, a management information base comprising a plurality of management objects, and a notification message generator, wherein said file transfer unit is adapted to change a value of a first one of said plurality of management objects in dependency of a failure to transfer a file, and said notification message generator is adapted to detect a change of said value and to generate a notification message upon said detecting.

14. The network device of claim 13, further comprising an alive message generator adapted to generate an alive message at a predetermined time offset.

15. The network device of claim 13 or 14, further comprising a receiver for receiving a file availability announcement and adapted to convey file availability information to said file transfer unit, wherein said file transfer unit is adapted to initiate a transfer of a file upon receipt of said file availability information.
